# EUROPEAN PATENT APPLICATION

(11) **EP 4 737 187 A1**
(43) Date of publication of application: **06.05.2026**
(21) Application number: 24829704.6
(22) Date of filing: 04.01.2024
(51) Int. Cl.: B60L 3/00, B60R 16/02, B60L 50/60

(54) **BATTERY HIGH-VOLTAGE BOX, BATTERY PACK, AND VEHICLE**

(30) Priority: 28.06.2023 CN 202321669016 U
(71) Applicant: Contemporary Amperex Technology Co., Limited, Ningde, Fujian 352100 (CN)
(72) Inventor: WU, Kai, Ningde, Fujian 352100 (CN); YANG, Zhengxing, Ningde, Fujian 352100 (CN); LIU, Bin, Ningde, Fujian 352100 (CN)
(74) Representative: Ran, Handong
(86) International application number: PCT/CN2024/070639
(87) International publication number: WO 2025/001041

(57) **Abstract**

Disclosed in embodiments of the present application are a battery high-voltage box, a battery pack, and a vehicle. The battery high-voltage box comprises a battery positive interface, a battery negative interface, a power transmission main loop, a controlled switch module, and a pre-charging loop; the power transmission main loop is separately connected to the battery positive interface and the battery negative interface, the controlled switch module is provided on the power transmission main loop, and the pre-charging loop is connected in parallel to the controlled switch module; the pre-charging loop is configured to pre-charge an external load when the pre-charging loop is turned on. An external load can be pre-charged by means of a pre-charging loop in a battery high-voltage box, so that a vehicle with a pre-charging loop or without a pre-charging loop can be pre-charged, thereby realizing the compatibility with vehicles of different original equipment manufacturers.

## Description

### CROSS-REFERENCE TO RELATED APPLICATIONS

The present application claims priority to Chinese Patent Application No. 202321669016.2, filed on June 28, 2023 and entitled "BATTERY HIGH-VOLTAGE BOX, BATTERY PACK, AND VEHICLE", which is incorporated herein by reference in their entireties.

### TECHNICAL FIELD

The present application relates to the field of battery swapping technologies, and specifically to a battery high-voltage box, a battery pack, and a vehicle.

### BACKGROUND

With the development of technology, the penetration rate of new energy vehicles is increasingly high. Currently, in the field of new energy battery swapping, the battery system is generally integrated within the battery pack. However, due to differences in the multi-in-one architecture of vehicles from different original equipment manufacturers, the requirements for the battery pack vary, resulting in incompatibility of the battery pack with vehicles from different original equipment manufacturers.

### SUMMARY

The present application proposes a battery high-voltage box, a battery pack, and a vehicle, aiming to address the technical problem that battery packs cannot be compatible with vehicles from different original equipment manufacturers.

According to a first aspect, an embodiment of the present application proposes a battery high-voltage box configured to connect a battery and an external load, where the battery high-voltage box includes a battery positive interface, a battery negative interface, a power transmission main circuit, a controlled switch module, and a precharge circuit;
the power transmission main circuit is connected to the battery positive interface and the battery negative interface respectively, the controlled switch module is disposed on the power transmission main circuit, and the precharge circuit is connected in parallel with the controlled switch module; and
the precharge circuit, when in a conductive state, is configured to precharge the external load.

This embodiment proposes a battery high-voltage box configured to connect a battery and an external load, where the battery high-voltage box includes a battery positive interface, a battery negative interface, a power transmission main circuit, a controlled switch module, and a precharge circuit, and the precharge circuit, when in a conductive state, is configured to precharge the external load, which addresses the technical problem in the prior art where vehicles from some original equipment manufacturers are equipped with precharge circuits while others are not, resulting in inconsistent requirements for the types of battery packs and causing the same type of battery pack impossible to be applied to vehicles from different original equipment manufacturers, thereby achieving compatibility with vehicles from different original equipment manufacturers.

In some embodiments, the battery high-voltage box further includes a main circuit positive interface configured to be connected to a positive electrode of an external load connector and a main circuit negative interface configured to be connected to a negative electrode of the external load connector.

In the embodiments, the battery high-voltage box includes a main circuit positive interface configured to be connected to the positive electrode of the external load connector and a main circuit negative interface configured to be connected to the negative electrode of the external load connector. The external load can be connected through the main circuit positive interface and the main circuit negative interface, thereby enabling precharging of the external load in a conductive state of the precharge circuit, so that the battery high-voltage box can be applied to vehicles from different original equipment manufacturers, improving the compatibility of the battery high-voltage box.

In some embodiments, the controlled switch module includes a main positive controlled switch module and/or a main negative controlled switch module, the main positive controlled switch module is connected to the battery positive interface and the main circuit positive interface respectively, and the main negative controlled switch module is connected to the battery negative interface and the main circuit negative interface respectively.

In the embodiments, the controlled switch module includes a main positive controlled switch module and/or a main negative controlled switch module, the main positive controlled switch module is connected to the battery positive interface and the main circuit positive interface respectively, and the main negative controlled switch module is connected to the battery negative interface and the main circuit negative interface respectively, which addresses the technical problem in the prior art where vehicles from some original equipment manufacturers are equipped with precharge circuits while others are not, resulting in inconsistent requirements for the types of battery swapping packs and causing the same type of battery swapping pack impossible to be applied to vehicles from different original equipment manufacturers, thereby achieving compatibility with vehicles from different original equipment manufacturers.

In some embodiments, the precharge circuit being connected in parallel with the controlled switch module includes the precharge circuit being connected in parallel with the main positive controlled switch module or the precharge circuit being connected in parallel with the main positive controlled switch module.

In the embodiments, the precharge circuit is connected in parallel with the main negative controlled switch module or the precharge circuit is connected in parallel with the main negative controlled switch module, such that the power transmission main circuit can be turned on to precharge the external load during high-voltage power-on of the vehicle, improving the safety of high-voltage power-on at the vehicle end.

In some embodiments, the battery high-voltage box further includes a charging interface configured to be connected to a charging socket.

In the embodiments, the battery high-voltage box further includes a charging interface configured to be connected to the charging socket, such that the charging circuit can be turned on to charge the battery cluster when the battery needs to supplement electric energy, thereby satisfying temporary power demand.

In some embodiments, the battery high-voltage box further includes a charging positive switch module and a charging negative switch module, and the charging interface includes a charging positive interface and a charging negative interface;
the charging positive interface is connected to the charging positive switch module, the charging positive switch module is connected to the battery positive interface, the charging negative interface is connected to the charging negative switch module, and the charging negative switch module is connected to the battery negative interface;
the charging positive switch module is configured to connect the charging positive interface to the battery positive interface during charging of a battery cluster; and
the charging negative switch module is configured to connect the charging negative interface to the battery negative interface during charging of the battery cluster.

In the embodiments, the battery high-voltage box includes a charging positive switch module and a charging negative switch module, the charging interface includes a charging positive interface and a charging negative interface, the charging positive interface is connected to the charging positive controlled switch module, the charging positive controlled switch module is connected to the battery positive interface, the charging negative interface is connected to the charging negative controlled switch module, the charging negative controlled switch module is connected to the battery negative interface, and the charging positive controlled switch module and the charging negative controlled switch module are capable of turning on the charging circuit to charge the battery when the battery needs to supplement electric energy, thereby satisfying temporary power demand.

In some embodiments, the battery high-voltage box further includes a manual service disconnect, a first end of the manual service disconnect is connected to the battery positive interface, and a second end of the manual service disconnect is connected to a first end of the charging positive switch module.

In the embodiments, the battery high-voltage box further includes a manual service disconnect, a first end of the manual service disconnect is connected to the battery positive interface, and a second end of the manual service disconnect is connected to a first end of the charging controlled switch module, so that the power supply of the high-voltage system can be disconnected through the manual service disconnect when a charging fault occurs, improving the charging safety of the vehicle.

In some embodiments, the battery high-voltage box further includes a main circuit positive interface and a main circuit negative interface, the main circuit positive interface is configured to be connected to a positive electrode of an external load connector, the main circuit negative interface is configured to be connected to a negative electrode of the external load connector, and the controlled switch module includes a main positive controlled switch module; and
a first end of the main positive controlled switch module is connected to the battery positive interface, and a second end of the main positive controlled switch module is connected to the main circuit positive interface.

In the embodiments, the battery high-voltage box includes a main circuit positive interface and a main circuit negative interface, the controlled switch module includes a main positive controlled switch module, a first end of the main positive controlled switch module is connected to the battery positive interface, and a second end of the main positive controlled switch module is connected to the main circuit positive interface, enabling precharging of the external load in a conductive state of the precharge circuit. This configuration adapts to vehicle ends with or without a precharge circuit, achieving compatibility with vehicles from different original equipment manufacturers.

In some embodiments, the precharge circuit is disposed in a main positive circuit in the power transmission main circuit, a first end of the precharge circuit is connected to the first end of the main positive controlled switch module, and a second end of the precharge circuit is connected to the second end of the main positive controlled switch module.

In this embodiment, a first end of the precharge circuit is connected to the first end of the main positive controlled switch module, and a second end of the precharge circuit is connected to the second end of the main positive controlled switch module, enabling precharging of the external load in a conductive state of the precharge circuit. This configuration adapts to vehicle ends with or without a precharge circuit, achieving compatibility with vehicles from different original equipment manufacturers.

In some embodiments, the battery high-voltage box further includes a main circuit positive interface and a main circuit negative interface, the main circuit positive interface is configured to be connected to a positive electrode of an external load connector, the main circuit negative interface is configured to be connected to a negative electrode of the external load connector, and the controlled switch module includes a main negative controlled switch module; and
a first end of the main negative controlled switch module is connected to the battery negative interface, and a second end of the main negative controlled switch module is connected to the main circuit negative interface.

In the embodiments, the battery high-voltage box includes a main circuit positive interface and a main circuit negative interface, the controlled switch module includes a main negative controlled switch module, and the main negative controlled switch module is disposed in the main negative circuit, enabling precharging of the external load through the precharge circuit connected in parallel with the main negative controlled switch module in the battery high-voltage box. This configuration adapts to vehicle ends with or without a precharge circuit, achieving compatibility with vehicles from different original equipment manufacturers.

In some embodiments, the precharge circuit is disposed in a main negative circuit in the power transmission main circuit, a first end of the precharge circuit is connected to the first end of the main negative controlled switch module, and a second end of the precharge circuit is connected to the second end of the main negative controlled switch module.

In the embodiments, the precharge circuit is disposed in the main negative circuit, and the precharge circuit is connected in parallel with the main negative controlled switch module, enabling precharging of the external load through the precharge circuit connected in parallel with the main negative controlled switch module in the battery high-voltage box. This configuration adapts to vehicle ends with or without a precharge circuit, achieving compatibility with vehicles from different original equipment manufacturers.

In some embodiments, the battery high-voltage box further includes a main circuit positive interface and a main circuit negative interface, the controlled switch module includes a main positive controlled switch module and a main negative controlled switch module, the main circuit positive interface is configured to be connected to a positive electrode of an external load connector, and the main circuit negative interface is configured to be connected to a negative electrode of the external load connector; and
a first end of the main positive controlled switch module is connected to the battery positive interface, a second end of the main positive controlled switch module is connected to the main circuit positive interface, a first end of the main negative controlled switch module is connected to the battery negative interface, and a second end of the main negative controlled switch module is connected to the main circuit negative interface.

In the embodiments, the controlled switch module includes a main positive controlled switch module and a main negative controlled switch module, such that the power transmission main circuit can be disconnected through another controlled switch module after one controlled switch module fails, improving the safety of the vehicle.

In some embodiments, the precharge circuit is disposed in a main positive circuit in the power transmission main circuit, a first end of the precharge circuit is connected to the first end of the main positive controlled switch module, and a second end of the precharge circuit is connected to the second end of the main positive controlled switch module, or the precharge circuit is disposed in a main negative circuit in the power transmission main circuit, a first end of the precharge circuit is connected to the first end of the main negative controlled switch module, and a second end of the precharge circuit is connected to the second end of the main negative controlled switch module.

In the embodiments, the precharge circuit is disposed in the main positive circuit in the power transmission main circuit, or disposed in the main negative circuit in the power transmission main circuit, enabling precharging of the external load in a conductive state of the precharge circuit and improving the safety of the vehicle end during high-voltage power-on.

In some embodiments, the precharge circuit includes a precharge switch module and a precharge resistor;
a first end of the precharge switch module is connected to the first end of the main positive controlled switch module, a second end of the precharge switch module is connected to a first end of the precharge resistor, and a second end of the precharge resistor is connected to the second end of the main positive controlled switch module, or a first end of the precharge switch module is connected to the first end of the main negative controlled switch module, a second end of the precharge switch module is connected to a first end of the precharge resistor, and a second end of the precharge resistor is connected to the second end of the main negative controlled switch module.

In the embodiments, the precharge circuit is connected in parallel with the main negative controlled switch module or the precharge circuit is connected in parallel with the main negative controlled switch module, such that the power transmission main circuit can be turned on to precharge the external load during high-voltage power-on of the external load, improving the safety of high-voltage power-on at the vehicle end.

In some embodiments, the battery high-voltage box further includes a charging positive switch module and a charging negative switch module, and the charging interface includes a charging positive interface and a charging negative interface;
a first end of the charging positive switch module is connected to the battery positive interface, a second end of the charging positive switch module is connected to the charging positive interface, a first end of the charging negative switch module is connected to the battery negative interface, and a second end of the charging negative switch module is connected to the charging negative interface;
the charging positive switch module is configured to connect the charging positive interface to the battery positive interface during charging of a battery cluster; and
the charging negative switch module is configured to connect the charging negative interface to the battery negative interface during charging of the battery cluster.

In the embodiments, the battery high-voltage box includes a charging positive interface, a charging negative interface, a charging positive switch module, and a charging negative switch module, the charging positive interface is connected to the charging positive switch module, the charging positive switch module is connected to the battery positive interface, the charging negative interface is connected to the charging negative switch module, the charging negative switch module is connected to the battery negative interface, and the charging positive switch module and the charging negative switch module are capable of turning on the charging circuit to charge the battery cluster when the battery cluster at the vehicle end needs to supplement electric energy, thereby satisfying temporary power demand.

According to a second aspect, an embodiment of the present application further proposes a battery pack, where the battery pack includes the battery high-voltage box according to any one of the above.

In some embodiments, the battery pack further includes a battery cluster and an external load connector;
a positive electrode of the battery cluster is connected to the battery positive interface, a negative electrode of the battery cluster is connected to the battery negative interface, a positive electrode of the external load connector is connected to the main circuit positive interface, and a negative electrode of the external load connector is connected to the main circuit negative interface; and
the external load connector is configured to supply power to an external load when the battery pack is at a vehicle end; and to transmit electric energy input by a battery swapping station to charge the battery cluster when the battery pack is at a battery swapping station.

In the embodiments, the battery pack includes a battery cluster and an external load connector, a positive electrode of the battery cluster is connected to the battery positive interface, a negative electrode of the battery cluster is connected to the battery negative interface, a positive electrode of the external load connector is connected to the main circuit positive interface, a negative electrode of the external load connector is connected to the main circuit negative interface, the external load connector is configured to supply power to the external load when the battery pack is at the vehicle end; and when the battery pack is at the battery swapping station, transmit electric energy input by the battery swapping station to charge the battery cluster; the external load connector can serve as both a discharge interface and a charging interface, achieving charging and discharging through the same port, reducing the hardware cost of the battery pack.

In some embodiments, the battery pack further includes a charging socket, a positive electrode of the charging socket is connected to the charging positive interface, and a negative electrode of the charging socket is connected to the charging negative interface; and
the charging socket is configured to transmit electric energy input by a charging gun to charge the battery cluster.

In the embodiments, the battery pack further includes a charging socket, a positive electrode of the charging socket is connected to the charging positive interface, and a negative electrode of the charging socket is connected to the charging negative interface, and the charging socket is disposed on the housing of the battery pack, without the need to establish a connection with the base at the vehicle end through a separate external load connector, reducing the number of external load connectors used, and lowering the hardware cost.

In some embodiments, the battery pack further includes a housing, and the battery high-voltage box is disposed in the housing; and
the external load connector and the charging socket are both disposed on the housing.

In this embodiment, the external load connector and the charging socket are disposed on the housing, which can reduce the number of external load connectors used, lowering the hardware cost.

According to a third aspect, embodiments of the present application also propose a vehicle, where the vehicle includes the battery pack according to any one of the above.

The above description is only an overview of the technical solutions of the present application. In order to more clearly understand the technical means of the present application so that they can be implemented in accordance with the contents of the description, and in order to make the above and other purposes, features, and advantages of the present application more apparent and understandable, specific embodiments of the present application are specifically cited below.

### BRIEF DESCRIPTION OF DRAWINGS

In order to more clearly illustrate the technical solutions in the embodiments of the present application or in the prior art, the drawings required for use in the description of the embodiments or the prior art will be briefly introduced below. It is obvious that the drawings in the following description are only some embodiments of the present application, and for those of ordinary skill in the art, other drawings can be obtained based on the structures shown in these drawings without creative effort.
FIG. 1 is a functional module diagram of an embodiment of a battery high-voltage box according to the present application;
FIG. 2 is a functional module schematic diagram of an embodiment of a battery high-voltage box according to the present application;
FIG. 3 is a schematic diagram of a precharge circuit connected in parallel with a main positive controlled switch module or a precharge circuit connected in parallel with a main negative controlled switch module in an embodiment of a battery high-voltage box according to the present application;
FIG. 4 is a schematic diagram of a precharge circuit connected in parallel with a main positive controlled switch module in an embodiment of a battery high-voltage box according to the present application;
FIG. 5 is a schematic diagram of a precharge circuit connected in parallel with a main negative controlled switch module in an embodiment of a battery high-voltage box according to the present application;
FIG. 6 is a connection schematic diagram of a precharge circuit in an embodiment of a battery high-voltage box according to the present application;
FIG. 7 is a functional module diagram of another embodiment of a battery high-voltage box according to the present application;
FIG. 8 is a circuit structure schematic diagram of a battery high-voltage box in an embodiment of a battery high-voltage box according to the present application;
FIG. 9 is a yet another circuit structure schematic diagram of a battery high-voltage box in an embodiment of a battery high-voltage box according to the present application;
FIG. 10 is a simplified schematic architectural diagram of a vehicle end without precharge in an embodiment of a battery high-voltage box according to the present application;
FIG. 11 is a simplified schematic architectural diagram of a vehicle end with precharge in an embodiment of a battery high-voltage box according to the present application;
FIG. 12 is a functional module diagram of an embodiment of a battery pack according to the present application;
FIG. 13 is a functional module diagram of a yet another embodiment of a battery pack according to the present application;
FIG. 14 is a schematic diagram of a battery pack establishing a connection with a vehicle end through a vehicle-mounted base in an embodiment of a battery pack according to the present application; and
FIG. 15 is a schematic diagram of a battery pack connected to a battery swapping station charger through a battery swapping station base in an embodiment of a battery pack according to the present application.

### Description of reference signs:

| Reference sign | Name | Reference sign | Name |
|---|---|---|---|
| A1 | Battery positive interface | A2 | Battery negative interface |
| B1 | Main circuit positive interface | B2 | Main circuit negative interface |
| 10 | Controlled switch module | 101 | Main positive controlled switch module |
| 102 | Main negative controlled switch module | Z | Power transmission main circuit |
| 20 | Precharge circuit | 201 | Precharge switch module |
| R | Precharge resistor | C1 | Charging positive interface |
| C2 | Charging negative interface | 30 | Charging positive switch module |
| 40 | Charging negative switch module | MSD | Manual service disconnect |
| K1 | Charging positive relay | K2 | Charging negative relay |
| K3 | Precharge relay | K4 | Main positive relay |
| K5 | Main negative relay | D1 | First low-voltage interface |
| D2 | Second low-voltage interface | BMU | Battery module management unit |
| HVB | High-voltage battery system | 50 | Battery cluster |
| 60 | External load connector | 70 | Charging socket |
| CSC | Monitor | | |

The implementation, functional features, and advantages of the purposes of the present application will be further described in conjunction with the embodiments and with reference to the drawings.

### DESCRIPTION OF EMBODIMENTS

The embodiments of the technical solutions of the present application will be described in detail below in conjunction with the drawings. The following embodiments are only used to more clearly illustrate the technical solutions of the present application, and therefore are only examples, and cannot be used to limit the protection scope of the present application.

Unless otherwise defined, all technical and scientific terms used herein have the same meaning as commonly understood by those skilled in the technical field of the present application; the terms used herein are only for the purpose of describing specific embodiments and are not intended to limit the present application; the terms "including" and "having" in the description and claims of the present application and the above description of the drawings, as well as any variations thereof, are intended to cover non-exclusive inclusions.

In the description of the embodiments of the present application, the technical terms "first", "second", or the like are only used to distinguish different objects, and cannot be understood as indicating or implying relative importance or implicitly indicating the number, specific order, or primary-secondary relationship of the indicated technical features. In the description of the embodiments of the present application, "multiple" means two or more, unless otherwise explicitly and specifically defined.

Reference herein to "embodiment" means that a particular feature, structure, or characteristic described in connection with the embodiment may be included in at least one embodiment of the present application. The appearance of this phrase in various places in the specification does not necessarily refer to the same embodiment, nor is it an independent or alternative embodiment that is mutually exclusive with other embodiments. Those skilled in the art understand, both explicitly and implicitly, that the embodiments described herein may be combined with other embodiments.

In the description of the embodiments of the present application, the term "and/or" is merely a description of the association relationship of associated objects, indicating that three relationships may exist. For example, A and/or B may indicate: A exists alone, A and B exist simultaneously, and B exists alone. In addition, the character "/" herein generally indicates that the associated objects before and after are in an "or" relationship.

In the description of the embodiments of the present application, the term "multiple" refers to more than two (including two), similarly, "multiple groups" refers to more than two groups (including two groups), and "multiple pieces" refers to more than two pieces (including two pieces).

In the description of the embodiments of the present application, the orientations or positional relationships indicated by technical terms such as "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", or the like, are based on the orientations or positional relationships shown in the drawings, and are only for the convenience of describing the embodiments of the present application and simplifying the description, rather than indicating or implying that the referred device or element must have a specific orientation, be constructed and operated in a specific orientation, and therefore cannot be understood as a limitation on the embodiments of the present application.

In the description of the embodiments of the present application, unless otherwise explicitly specified and limited, technical terms such as "install", "connect", "connection", "fix", or the like. should be understood in a broad sense, for example, it can be a fixed connection, a detachable connection, or an integral connection; it can be a mechanical connection or an electrical connection; it can be a direct connection or an indirect connection through an intermediate medium, or it can be the internal communication of two elements or the interaction relationship between two elements. For those of ordinary skill in the art, the specific meanings of the above terms in the embodiments of the present application can be understood according to specific circumstances.

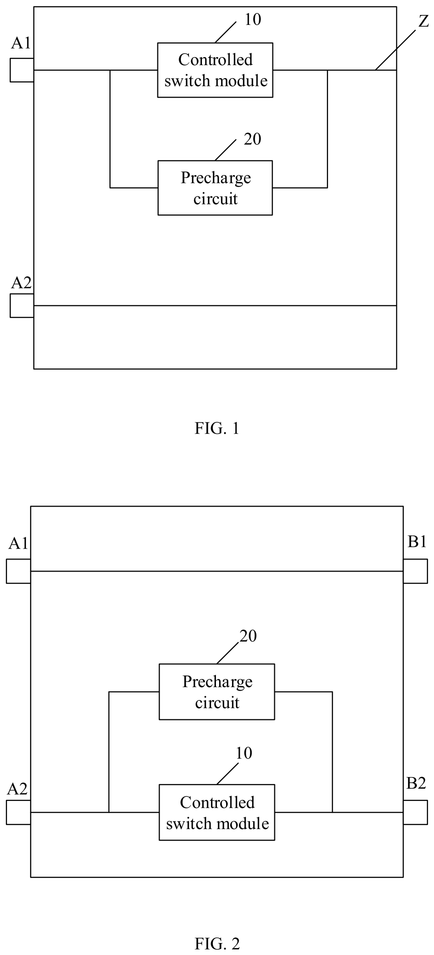

In some embodiments of the present application, referring to FIG. 1, the present application provides a battery high-voltage box configured to connect a battery and an external load. The battery high-voltage box includes a battery positive interface A1, a battery negative interface A2, a power transmission main circuit Z, a controlled switch module 10, and a precharge circuit 20. The power transmission main circuit Z is connected to the battery positive interface A1 and the battery negative interface A2 respectively, the controlled switch module 10 is disposed on the power transmission main circuit, and the precharge circuit 20 is connected in parallel with the controlled switch module 10. The precharge circuit 20, when in a conductive state, is configured to precharge the external load.

The battery high-voltage box may also be referred to as a high-voltage power distribution unit (PDU), and the battery high-voltage box may be a high-voltage power distribution unit that distributes the direct current output by a battery cluster and monitors overcurrent and overvoltage in a high-voltage system. The battery positive interface A1 may be an interface connected to a positive electrode of the battery cluster; the battery negative interface A2 may be an interface connected to a negative electrode of the battery cluster; the power transmission main circuit Z may be a main circuit for electric energy transmission; the precharge circuit 20 may be a circuit that precharges an X capacitor at a vehicle end during high-voltage power-on at the vehicle end.

The controlled switch module 10 may be a switch module that connects or disconnects the power transmission main circuit according to a control signal output by a control unit.

In an optional implementation, for example, the external load may be an external drive of a vehicle, the controlled switch module 10 is disposed on the power transmission main circuit Z. When the vehicle end lacks precharge, the process of performing high-voltage power-on at the vehicle may be as follows: The BMS is powered on with low voltage upon receiving a wake-up signal; after receiving a high-voltage power-on command sent by the vehicle end, the BMS controls the precharge circuit 20 to turn on to precharge the external drive at the vehicle end; after successful precharge, the controlled switch module 10 is controlled to close, then the precharge circuit 20 is controlled to disconnect; and once the controlled switch module 10 is closed, the battery end completes the high-voltage power-on, and a power-on completion command is fed back to the vehicle end. When the vehicle end has precharge, the process of performing high-voltage power-on at the vehicle may be as follows: The BMS is powered on with low voltage upon receiving a wake-up signal; after receiving a high-voltage power-on command sent by the vehicle end, the BMS controls the precharge circuit 20 to turn on to perform a simulated precharge operation, where the simulated precharge operation may be that the precharge circuit 20 in the battery high-voltage box is turned on, but since the vehicle end has its own precharge, the precharge circuit 20 will not precharge the external drive at the vehicle end after being turned on, and the real precharge operation is performed by the precharge circuit at the vehicle end; after the simulated precharge operation is performed, the positive controlled switch module 10 is controlled to close, then the precharge circuit 20 is controlled to disconnect; and the controlled switch module 10 is closed, the battery end completes the high-voltage power-on, and a power-on completion command is fed back to the vehicle end.

This embodiment proposes a battery high-voltage box configured to connect a battery and an external load, where the battery high-voltage box includes a battery positive interface, a battery negative interface, a power transmission main circuit, a controlled switch module, and a precharge circuit, and the precharge circuit, when in a conductive state, is configured to precharge the external load, such that the external load can be precharged through the precharge circuit provided in the battery high-voltage box, which addresses the technical problem in the prior art where vehicles from some original equipment manufacturers are equipped with precharge circuits while others are not, resulting in inconsistent requirements for the types of battery packs and causing the same type of battery pack impossible to be applied to vehicles from different original equipment manufacturers, thereby achieving compatibility with vehicles from different original equipment manufacturers.

In some embodiments, referring to FIG. 2, the battery high-voltage box further includes a main circuit positive interface B1 configured to be connected to a positive electrode of an external load connector and a main circuit negative interface B2 configured to be connected to a negative electrode of the external load connector.

The external load connector may be a connector configured to connect the battery high-voltage box and the external load, for example, the external load connector includes a fast-swapping connector or other connectors possessing identical or similar functions. The main circuit positive interface B1 may be an interface connected to the positive electrode of the power supply/charging main circuit; and the main circuit negative interface B2 may be an interface connected to the negative electrode of the power supply/charging main circuit.

In the embodiments, the battery high-voltage box includes a main circuit positive interface configured to be connected to the positive electrode of the external load connector and a main circuit negative interface configured to be connected to the negative electrode of the external load connector. The external load can be connected through the main circuit positive interface and the main circuit negative interface, thereby enabling precharging of the external load when the precharge circuit is turned on, so that the battery high-voltage box can be applied to vehicles from different original equipment manufacturers, improving the compatibility of the battery high-voltage box.

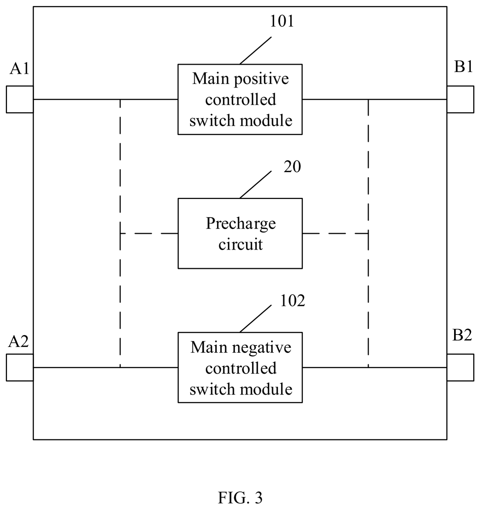

In some embodiments, referring to FIG. 3, the controlled switch module 10 includes a main positive controlled switch module 101 and/or a main negative controlled switch module 102. The main positive controlled switch module 101 is connected to the battery positive interface A1 and the main circuit positive interface B1 respectively. The main negative controlled switch module 102 is connected to the battery negative interface A2 and the main circuit negative interface B2 respectively.

The main positive controlled switch module 101 may be a switch module that connects or disconnects the main circuit positive interface B1 and the battery positive interface A1 according to a control signal output by a control unit; and the main negative controlled switch module 102 may be a switch module that connects or disconnects the main circuit negative interface B1 and the battery negative interface A1 according to a control signal output by the control unit.

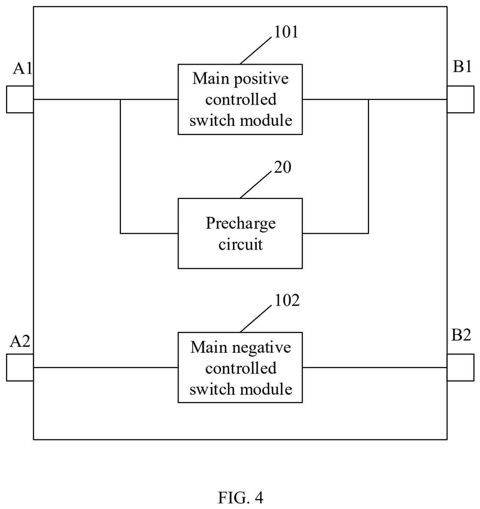

In an optional implementation, referring to FIG. 4, assuming that the controlled switch module 10 includes a main positive controlled switch module and that the vehicle end lacks precharge, during high-voltage power-on at the vehicle, the BMS is powered on with low-voltage upon receiving a wake-up signal; after receiving a high-voltage power-on command sent by the vehicle end, the BMS controls the precharge circuit 20 to turn on, connecting the battery positive interface A1 to the main circuit positive interface B1, thereby turning on the power transmission main circuit Z to precharge the external load at the vehicle end; after successful precharge, the main positive controlled switch module 101 is controlled to close, then the precharge circuit 20 is controlled to disconnect; and once the main positive controlled switch module 101 is closed, the battery end completes the high-voltage power-on, and a power-on completion command is fed back to the vehicle end.

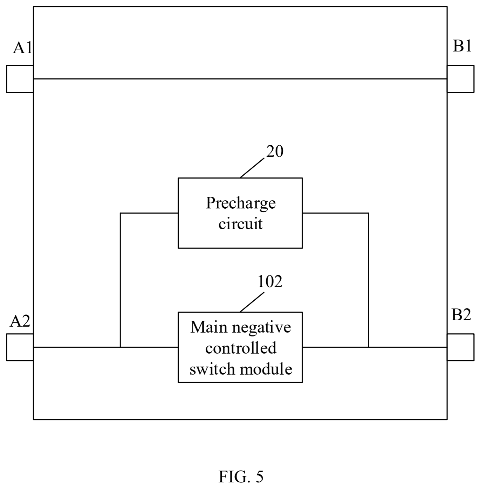

In another optional implementation, referring to FIG. 5, assuming that the controlled switch module 10 includes a main negative controlled switch module 20 and that the vehicle end lacks precharge, during high-voltage power-on at the vehicle, the BMS is powered on with low-voltage upon receiving a wake-up signal; after receiving a high-voltage power-on command sent by the vehicle end, the BMS controls the precharge circuit 20 to turn on, thereby connecting the battery negative interface A2 to the main circuit negative interface B2 to turn on the power transmission main circuit Z to precharge the external load at the vehicle end; after successful precharge, the main negative controlled switch module 102 is controlled to close, then the precharge circuit 20 is controlled to disconnect; and once the main negative controlled switch module 102 is closed, the battery end completes the high-voltage power-on, and a power-on completion command is fed back to the vehicle end.

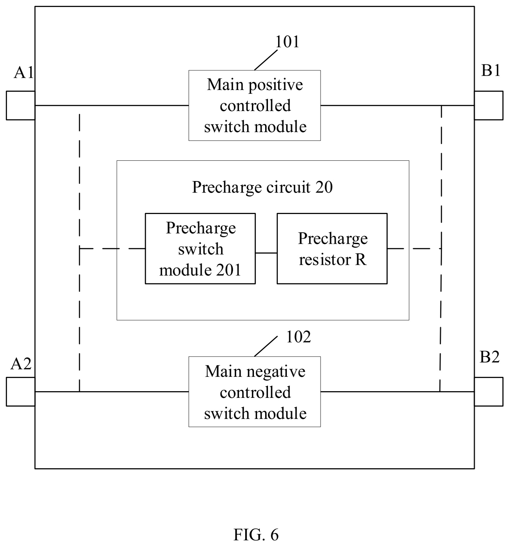

In yet another optional embodiment, continuing to refer to FIG. 4, FIG. 4 is a schematic diagram of a precharge circuit 20 connected in parallel with the main positive controlled switch module 101. When the battery cluster is charged through the main circuit, the main positive controlled switch module 101 and the main negative controlled switch module 102 are closed, the main circuit is turned on, and the main circuit positive interface B1 and the main circuit negative interface B2 receive electric energy input by a charging device, and transmit the electric energy to the battery positive interface A1 and the battery negative interface A2 through the main circuit to charge the battery cluster. In the case of supplying power through the main circuit, the main positive controlled switch module 101 and/or the main negative controlled switch module 102 is closed, the main circuit is turned on, and the battery cluster transmits electric energy through the battery positive interface A1 and the battery negative interface A2, and the electric energy transmitted by the battery cluster is output to the main circuit positive interface B1 and the main circuit negative interface B2 through the main circuit to supply power to the vehicle end. In the case of high-voltage power-on at the vehicle end, after a high-voltage power-on command sent by the vehicle end is received, the main negative controlled switch module 102 is controlled to close, then the precharge circuit 20 is controlled to turn on to precharge the vehicle end; after successful precharge, the main positive controlled switch module 101 is controlled to close, then the precharge circuit 20 is controlled to disconnect; after both the main positive controlled switch module 101 and the main negative controlled switch module 102 are closed, the battery end completes the high-voltage power-on, and a power-on completion command is fed back to the vehicle end. In another implementation, referring to FIG. 6, FIG. 6 is a schematic diagram of a precharge circuit 20 connected in parallel with the main negative controlled switch module 102, the case where the precharge circuit 20 is connected in parallel with the main negative controlled switch module 102 is similar to the case where the precharge circuit 20 is connected in parallel with the main positive controlled switch 101, and details are not repeated here in this embodiment.

In this embodiment, the controlled switch module includes a main positive controlled switch module and/or a main negative controlled switch module, the main positive controlled switch module is connected to the battery positive interface and the main circuit positive interface respectively, and the main negative controlled switch module is connected to the battery negative interface and the main circuit negative interface respectively, which addresses the technical problem in the prior art where vehicles from some original equipment manufacturers are equipped with precharge circuits while others are not, resulting in inconsistent requirements for the types of battery swapping packs and causing the same type of battery swapping pack impossible to be applied to vehicles from different original equipment manufacturers, thereby achieving compatibility with vehicles from different original equipment manufacturers.

In some embodiments, continuing to refer to FIG. 3, the precharge circuit 20 being connected in parallel with the controlled switch module 10 includes the precharge circuit 20 being connected in parallel with the main positive controlled switch module 101 or the precharge circuit 20 being connected in parallel with the main negative controlled switch module 102.

In an optional implementation, an example will be given with the precharge circuit 20 connected in parallel with the main positive controlled switch module 101. When the vehicle end lacks precharge, the process of performing high-voltage power-on at the vehicle may be as follows: The BMS is powered on with low voltage upon receiving a wake-up signal; after receiving a high-voltage power-on command sent by the vehicle end, the BMS controls the main negative controlled switch module 102 to close, then controls the precharge circuit 20 to turn on to precharge the external load at the vehicle end; after successful precharge, the main positive controlled switch module 101 is controlled to close, then the precharge circuit 20 is controlled to disconnect, both the main positive controlled switch module 101 and the main negative controlled switch module 102 are closed; and the battery end completes the high-voltage power-on, and a power-on completion command is fed back to the vehicle end. When the vehicle end is to be precharged, the process of performing high-voltage power-on at the vehicle may be as follows: The BMS is powered on with low voltage upon receiving a wake-up signal; after receiving a high-voltage power-on command sent by the vehicle end, the BMS controls the main negative controlled switch module 102 to close, then controls the precharge circuit 20 to turn on to perform a simulated precharge operation, where the simulated precharge operation may be that the precharge circuit 20 in the battery high-voltage box is turned on, but since the vehicle end has its own precharge, the precharge circuit 20 will not precharge the external load after being turned on, and the real precharge operation is performed by the vehicle end; after the simulated precharge operation is performed, the main positive controlled switch module 101 is controlled to close, then the precharge circuit 20 is controlled to disconnect; and both the main positive controlled switch module 101 and the main negative controlled switch module 102 are closed, the battery end completes the high-voltage power-on, and a power-on completion command is fed back to the vehicle end.

In another optional implementation, referring to FIG. 6, the precharge circuit 20 includes a precharge switch module 201 and a precharge resistor R. The precharge switch module 201 and the precharge resistor R are connected in series and then connected in parallel with the main positive controlled switch module 101, or the precharge switch module 201 and the precharge resistor R are connected in series and then connected in parallel with the main negative controlled switch module 102.

The precharge switch module 201 is configured to connect the battery positive interface A1, the precharge resistor R, and the main circuit positive interface B1 during high-voltage power-on at the vehicle; or connect the battery negative interface A2, the precharge resistor R, and the main circuit negative interface B2 during high-voltage power-on at the vehicle.

The precharge switch module may be a switch module that connects or disconnects the precharge circuit according to a control signal output by a control unit.

In an implementation, a first end of the precharge switch module 201 is connected to the first end of the main positive controlled switch module 101, a second end of the precharge switch module 201 is connected to a first end of the precharge resistor R, and a second end of the precharge resistor R is connected to the second end of the main positive controlled switch module. In another implementation, a first end of the precharge switch module 201 is connected to the first end of the main negative controlled switch module 102, a second end of the precharge switch module 201 is connected to a first end of the precharge resistor R, and a second end of the precharge resistor R is connected to the second end of the main negative controlled switch module.

In an optional embodiment, an example will be given with the precharge switch module 201 connected in series with the precharge resistor R and then connected in parallel with the main negative controlled switch module 102. In the case of high-voltage power-on at the vehicle end, the BMS is powered on with low voltage upon receiving a wake-up signal; after receiving a high-voltage power-on command sent by the vehicle end, the BMS controls the main positive controlled switch module 101 to close, then controls the precharge switch module 201 to close to turn on the precharge circuit 20 to precharge the vehicle end; after completion of the precharge, the main negative controlled switch module 102 is controlled to close, then the precharge switch module 201 is controlled to disconnect; and if both the main positive controlled switch module 101 and the main negative controlled switch module 102 are closed, the battery end completes the high-voltage power-on, and a power-on completion command is fed back to the vehicle end.

In this embodiment, the precharge circuit is connected in parallel with the main negative controlled switch module or the precharge circuit is connected in parallel with the main negative controlled switch module, such that the power transmission main circuit can be turned on to precharge the external load during high-voltage power-on of the external load, improving the safety of high-voltage power-on at the vehicle end.

In an optional embodiment, the battery high-voltage box further includes a charging interface configured to be connected to a charging socket.

The charging socket may be a socket for charging the battery cluster; and the charging interface may be an interface that establishes a connection with the charging socket.

In this embodiment, the battery high-voltage box further includes a charging interface configured to be connected to the charging socket, such that the charging circuit can be turned on to charge the battery cluster at the vehicle end when the battery cluster needs to supplement electric energy, thereby satisfying temporary power demand.

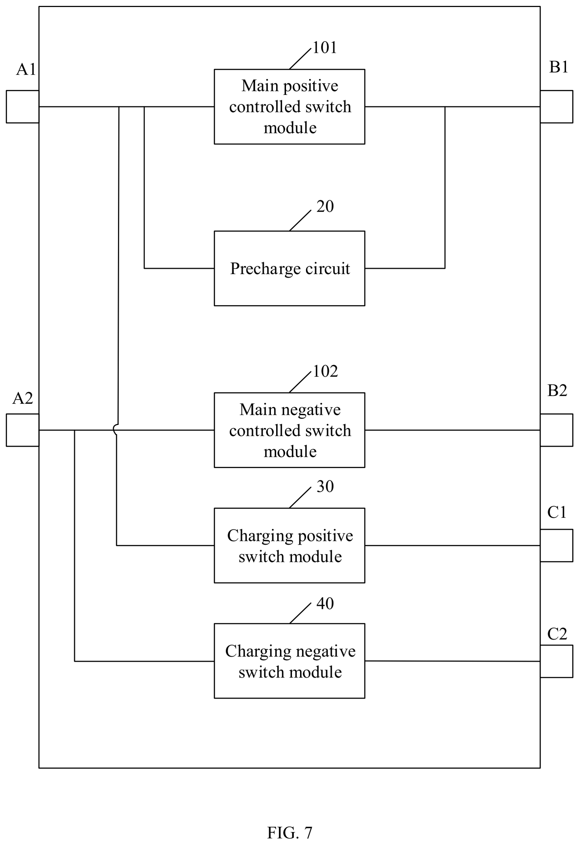

In some embodiments, referring to FIG. 7, the battery high-voltage box further includes a charging positive switch module 30 and a charging negative switch module 40, and the charging interface includes a charging positive interface C1 and a charging negative interface C2. The charging positive interface C1 is connected to the charging positive switch module 30, and the charging positive switch module 30 is connected to the battery positive interface A1. The charging negative interface C2 is connected to the charging negative switch module 40, and the charging negative switch module 40 is connected to the battery negative interface A2. The charging positive controlled module 30 is configured to connect the charging positive interface C1 to the battery positive interface A1 during charging of the battery cluster. The charging negative switch module 40 is configured to connect the charging negative interface C2 to the battery negative interface A2 during charging of the battery cluster.

The charging positive interface C1 may be a positive electrode interface of the charging circuit of the battery cluster; the charging negative interface C2 may be a negative electrode interface of the charging circuit of the battery cluster; the charging positive switch module 30 may be a switch module that connects or disconnects the positive electrode of the charging circuit according to a control signal output by a control unit; and the charging negative switch module 40 may be a switch module that connects or disconnects the negative electrode of the charging circuit according to a control signal output by a control unit.

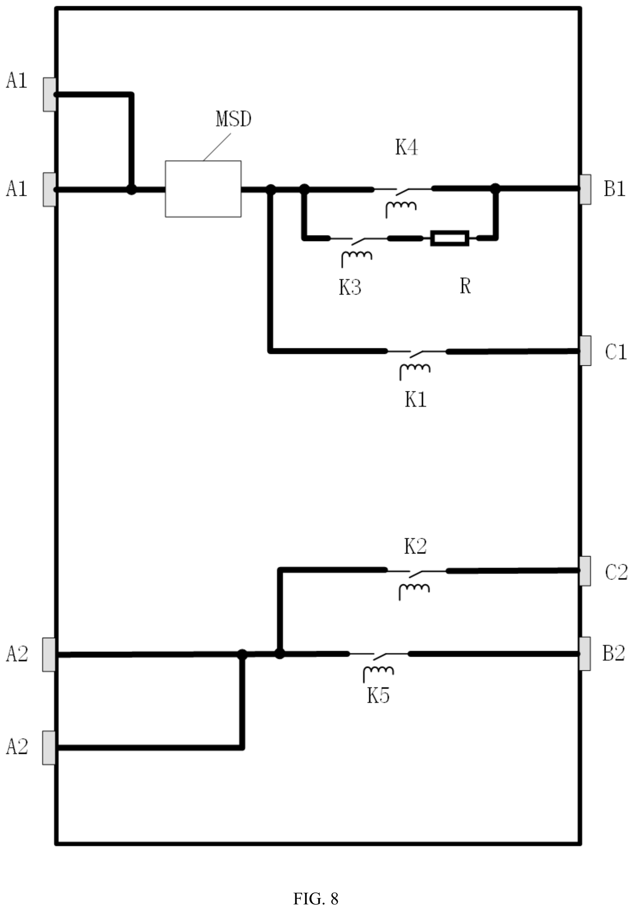

In an implementation, referring to FIG. 8, the charging positive switch module 30 is a charging positive relay K1, the charging negative switch module 40 is a charging negative relay K2, the charging positive relay may be a relay disposed on the positive electrode of the charging circuit; the charging negative relay may be a relay disposed on the negative electrode of the charging circuit. In the case of charging the battery cluster, the relay K1 and the relay K2 are closed, the charging circuit is turned on, an external charging device inputs electric energy through the charging positive interface C1 and the charging negative interface C2, and the charging circuit transmits the electric energy to the battery positive interface A1 and the battery negative interface A2 to charge the battery cluster, and disposing one relay each on the positive electrode and the negative electrode of the charging circuit enables disconnecting the charging circuit through another relay after one relay fails and sticks, thereby making the charging interface de-energized and improving the charging safety of the vehicle.

In an optional implementation, the precharge circuit 20 is connected in parallel with the main positive controlled switch module 101. In the case of charging the battery cluster, an external charging device inputs electric energy through the charging positive interface C1 and the charging negative interface C2, the charging positive switch module 30 and the charging negative switch module 40 are closed, and the charging circuit is turned on to transmit the electric energy input by the external charging device to the battery cluster for charging. In another optional implementation, the precharge circuit 20 is connected in parallel with the main negative controlled switch module 102, the charging process is similar to the above charging process, and details are not repeated here in this embodiment.

In the embodiments, the battery high-voltage box includes a charging positive switch module and a charging negative switch module, the charging interface includes a charging positive interface and a charging negative interface, the charging positive interface is connected to the charging positive switch module, the charging positive switch module is connected to the battery positive interface, the charging negative interface is connected to the charging negative switch module, the charging negative switch module is connected to the battery negative interface, such that electric energy can be supplemented through the charging positive interface and the charging negative interface when the vehicle end needs to supplement electric energy, thereby satisfying temporary power demand.

In some embodiments, continuing to refer to FIG. 8, the battery high-voltage box further includes a manual service disconnect MSD, a first end of the manual service disconnect MSD is connected to the battery positive interface A1, and a second end of the manual service disconnect MSD is connected to a first end of the charging positive switch module 30.

The manual service disconnect may be a high-voltage connector with a fuse.

In an implementation, during vehicle maintenance, the manual service disconnect MSD may be disconnected to isolate the main circuit from the charging circuit, ensuring that the main circuit interface and the charging interface are de-energized. Specifically, the manual service disconnect may be disposed on the main circuit, and in the case of a charging fault and/or a power-on fault at the vehicle, the circuit may be disconnected through the manual service disconnect, thereby isolating the high voltage of the battery system to the outside, facilitating personnel maintenance.

In some embodiments, the precharge switch module 201 is a precharge relay K3. The precharge relay may be a relay disposed in the precharge circuit, continuing to refer to FIG. 8, in the case of precharging the external load, the precharge relay K3 is closed, the precharge circuit 20 is turned on to precharge the vehicle end, and after the precharge is completed, the precharge relay K3 is disconnected, and the precharge circuit 20 is disconnected.

In an optional implementation, the selection of the precharge relay and the precharge resistor may be adapted based on the X capacitor at the vehicle end, and the resistance value of the precharge resistor may be calculated using the following formula: R=t/C*Ln[(V1-V0)/(V1-Vt)], where R is the resistance value of the precharge resistor, t is the precharge demand time (which may be determined based on the demands of different original equipment manufacturers), C is the X capacitor at the vehicle end (which may be determined based on the demands of different original equipment manufacturers), V0 is the initial voltage value on the capacitor, V1 is the final voltage value to which the capacitor can be charged or discharged, and Vt is the voltage value on the capacitor at time t.

In another optional implementation, continuing to refer to FIG. 8, the main positive controlled switch module 101 is a main positive relay K4, the main negative controlled switch module 102 is a main negative relay K5, the main positive relay may be a relay disposed on the positive electrode of the main circuit; and the main negative relay may be a relay disposed on the negative electrode of the main circuit. An example will be given with the precharge circuit connected in parallel with the main positive controlled switch module. In the case of supplying power to the vehicle end, the main positive relay K4 and the main negative relay K5 are closed, the main circuit is turned on, electric energy output by the battery cluster is transmitted to the main circuit through the battery positive interface A1 and the battery negative interface A2, and transmitted to the main circuit positive interface B1 and the main circuit negative interface B2 through the main circuit, and the main circuit positive interface B1 and the main circuit negative interface B2 output electric energy to supply power to the vehicle end. During high-voltage power-on at the vehicle, the BMS is powered on with low voltage upon receiving a wake-up signal; after the BMS receives a high-voltage power-on command sent by the vehicle end, the main negative relay K5 is closed after receiving a control command, the precharge relay K3 is closed to precharge the vehicle end after receiving a control command; after successful precharge, the main positive relay K4 is closed after receiving a control command, the precharge relay K3 is disconnected after receiving a control command; and after both the main positive relay K4 and the main negative relay K5 are closed, a power-on completion command is fed back to the vehicle end. In this embodiment, one relay is disposed on each of the positive electrode and the negative electrode of the main circuit, such that in the event of one relay failing and sticking, the main circuit can be disconnected through another relay, thereby ensuring that the main circuit interface are de-energized and improving the safety of power supply to the vehicle.

In yet another optional implementation, if the main positive relay K4 fails and sticks, the main negative relay K5 can be disconnected normally, ensuring that the main circuit interface is de-energized; and if the main negative relay K5 fails and sticks, the main positive relay K4 can be disconnected normally, ensuring that the main circuit interface is de-energized.

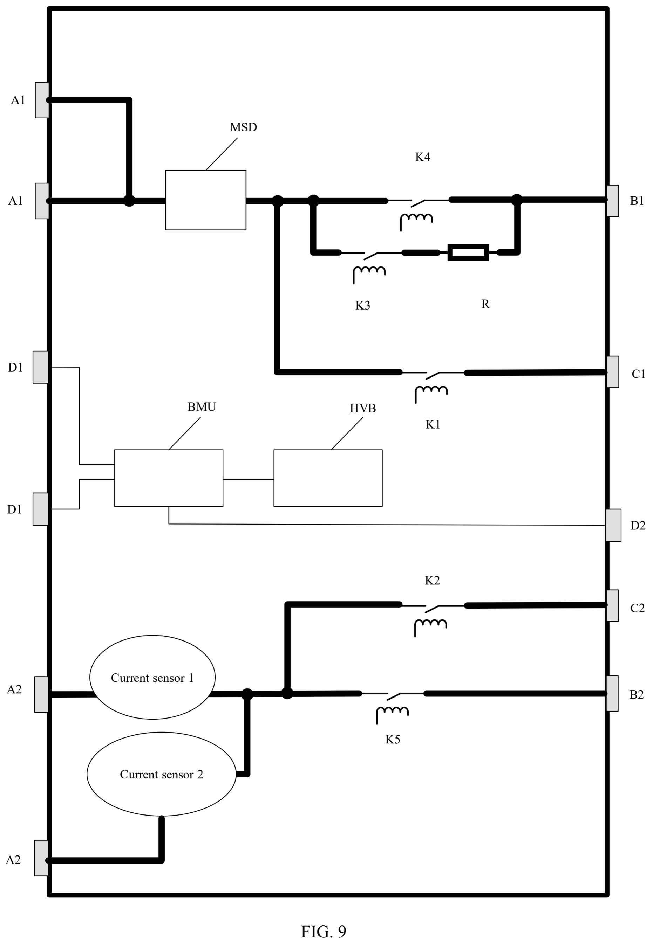

In yet another optional implementation, referring to FIG. 9, the battery high-voltage box further includes a first low-voltage interface D1, a second low-voltage interface D2, a battery module management unit BMU, a high-voltage battery system HVB, and a current sensor, where the first low-voltage interface D1 is connected to a monitor disposed on a battery cell in the battery cluster, the battery module management unit BMU receives battery monitoring information sent by the monitor through the first low-voltage interface D1, and transmits the battery monitoring information to the second low-voltage interface D2, and the current sensor is configured to monitor the circuit current to prevent circuit overcurrent.

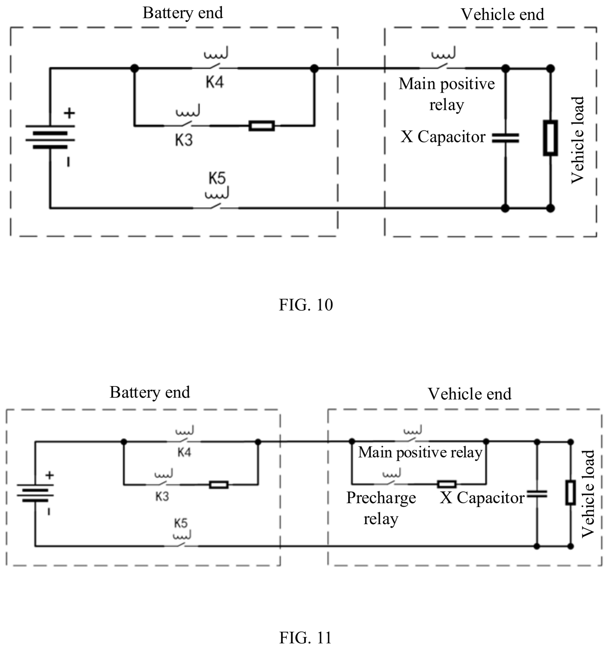

In yet another optional embodiment, referring to FIG. 10, FIG. 10 is a simplified schematic architectural diagram of a vehicle end without precharge. In the case of precharging the external load, the main negative relay K5 at the battery end is closed, the main positive relay at the vehicle end is closed, then the precharge relay K3 at the battery end is closed to precharge the X capacitor at the vehicle end, after the precharge is completed, the main positive relay K4 at the battery end is closed, then the precharge relay K3 is disconnected, completing the precharge.

In yet another optional embodiment, referring to FIG. 11, FIG. 11 is a simplified schematic architectural diagram of a vehicle end with precharge. In the case of precharging the external load, the main negative relay K5 at the battery end is closed, the precharge relay K3 is closed to perform a simulated precharge operation, after the simulated precharge operation is performed, the main positive relay K4 is closed, then the precharge relay at the vehicle end is closed to precharge the X capacitor, after the precharge is completed, the main positive relay at the vehicle end is closed, then the precharge relay at the vehicle end is disconnected.

In this embodiment, the battery high-voltage box further includes a manual service disconnect, a first end of the manual service disconnect is connected to the battery positive interface, and a second end of the manual service disconnect is connected to the first end of the main positive controlled switch module and the first end of the charging controlled switch module, so that the power supply of the high-voltage system can be disconnected through the manual service disconnect, improving the safety of the vehicle.

In an optional embodiment, continuing to refer to FIG. 2, the battery high-voltage box further includes a main circuit positive interface B1 and a main circuit negative interface B2. The main circuit positive interface B1 is configured to be connected to a positive electrode of an external load connector. The main circuit negative interface B2 is configured to be connected to a negative electrode of the external load connector. The controlled switch module 10 includes a main positive controlled switch module 101. A first end of the main positive controlled switch module 101 is connected to the battery positive interface A1, and a second end of the main positive controlled switch module 101 is connected to the main circuit positive interface B1.

In this embodiment, the battery high-voltage box includes a main circuit positive interface and a main circuit negative interface, the controlled switch module includes a main positive controlled switch module, a first end of the main positive controlled switch module is connected to the battery positive interface, and a second end of the main positive controlled switch module is connected to the main circuit positive interface, enabling precharging of the external load in a conductive state of the precharge circuit. This configuration adapts to vehicle ends with or without a precharge circuit, achieving compatibility with vehicles from different original equipment manufacturers.

In some embodiments, continuing to refer to FIG. 4, the precharge circuit 20 is disposed in a main positive circuit in the power transmission main circuit, a first end of the precharge circuit 20 is connected to the first end of the main positive controlled switch module 101, and a second end of the precharge circuit 20 is connected to the second end of the main positive controlled switch module 101.

In the embodiments, a first end of the precharge circuit is connected to the first end of the main positive controlled switch module, and a second end of the precharge circuit is connected to the second end of the main positive controlled switch module, enabling precharging of the external load in a conductive state of the precharge circuit. This configuration adapts to vehicle ends with or without a precharge circuit, achieving compatibility with vehicles from different original equipment manufacturers.

In some embodiments, continuing to refer to FIG. 2, the battery high-voltage box further includes a main circuit positive interface B1 and a main circuit negative interface B2. The main circuit positive interface B1 is configured to be connected to a positive electrode of an external load connector, and the main circuit negative interface B2 is configured to be connected to a negative electrode of the external load connector. The controlled switch module 10 includes a main negative controlled switch module 102. A first end of the main negative controlled switch module 102 is connected to the battery negative interface A2, and a second end of the main negative controlled switch module 102 is connected to the main circuit negative interface B2.

In the embodiments, the battery high-voltage box includes a main circuit positive interface and a main circuit negative interface, the controlled switch module includes a main negative controlled switch module, and the main negative controlled switch module is disposed in the main negative circuit, enabling precharging of the external load through the precharge circuit connected in parallel with the main negative controlled switch module in the battery high-voltage box. This configuration adapts to vehicle ends with or without a precharge circuit, achieving compatibility with vehicles from different original equipment manufacturers.

In some embodiments, continuing to refer to FIG. 5, the precharge circuit 20 is disposed in a main negative circuit in the power transmission main circuit, a first end of the precharge circuit 20 is connected to the first end of the main negative controlled switch module 102, and a second end of the precharge circuit 20 is connected to the second end of the main negative controlled switch module 102.

In the embodiments, the precharge circuit is disposed in the main negative circuit, and the precharge circuit is connected in parallel with the main negative controlled switch module, enabling precharging of the external load through the precharge circuit connected in parallel with the main negative controlled switch module in the battery high-voltage box. This configuration adapts to vehicle ends with or without a precharge circuit, achieving compatibility with vehicles from different original equipment manufacturers.

In some embodiments, continuing to refer to FIG. 3, the battery high-voltage box further includes a main circuit positive interface B1 and a main circuit negative interface B2, and the controlled switch module 10 includes a main positive controlled switch module 101 and a main negative controlled switch module 102. The main circuit positive interface B1 is configured to be connected to a positive electrode of an external load connector, and the main circuit negative interface B2 is configured to be connected to a negative electrode of the external load connector. A first end of the main positive controlled switch module 101 is connected to the battery positive interface A1, and a second end of the main positive controlled switch module 101 is connected to the main circuit positive interface B1. A first end of the main negative controlled switch module 102 is connected to the battery negative interface A2, and a second end of the main negative controlled switch module 102 is connected to the main circuit negative interface B2.

In the embodiments, the battery high-voltage box includes a battery positive interface, a main circuit positive interface, a battery negative interface, a main circuit negative interface, and a precharge circuit, the controlled switch module includes a main positive controlled switch module and a main negative controlled switch module, and the precharge circuit is configured to turn on the power transmission main circuit to precharge the vehicle end during high-voltage power-on at the vehicle end, such that the external load is precharged through the precharge circuit provided in the battery high-voltage box, which addresses the technical problem in the prior art where vehicles from some original equipment manufacturers are equipped with precharge circuits while others are not, resulting in inconsistent requirements for the types of battery packs and causing the same type of battery pack impossible to be applied to vehicles from different original equipment manufacturers, thereby achieving compatibility with vehicles from different original equipment manufacturers.

In an optional embodiment, continuing to refer to FIG. 3, the precharge circuit 20 is disposed in a main positive circuit in the power transmission main circuit, a first end of the precharge circuit 20 is connected to the first end of the main positive controlled switch module 101, and a second end of the precharge circuit 20 is connected to the second end of the main positive controlled switch module 101; or the precharge circuit 20 is disposed in a main negative circuit in the power transmission main circuit, a first end of the precharge circuit 20 is connected to the first end of the main negative controlled switch module 102, and a second end of the precharge circuit 20 is connected to the second end of the main negative controlled switch module 102. The precharge circuit 20 is configured to connect the battery positive interface A1 to the main circuit positive interface B1 during high-voltage power-on at the vehicle, and connect the battery negative interface A2 to the main circuit negative interface B2 through the main negative controlled switch module 102 to turn on the power transmission main circuit Z to precharge the vehicle end; or is configured to connect the battery negative interface A2 to the main circuit negative interface B2 during high-voltage power-on at the vehicle, and connect the battery negative interface A2 to the main circuit negative interface B2 through the main negative controlled switch 102 to turn on the power transmission main circuit Z to precharge the vehicle.

In this embodiment, the precharge circuit is disposed in the main positive circuit in the power transmission main circuit, or disposed in the main negative circuit in the power transmission main circuit, enabling precharging of the external load in a conductive state of the precharge circuit and improving the safety of the external load during power-on.

In some embodiments, continuing to refer to FIG. 6, the precharge circuit 20 includes a precharge switch module 201 and a precharge resistor R. A first end of the precharge switch module 201 is connected to the first end of the main positive controlled switch module 101, a second end of the precharge switch module 201 is connected to a first end of the precharge resistor R, and a second end of the precharge resistor R is connected to the second end of the main positive controlled switch module 101, or a first end of the precharge switch module 201 is connected to the first end of the main negative controlled switch module 102, a second end of the precharge switch module 201 is connected to a first end of the precharge resistor R, and a second end of the precharge resistor R is connected to the second end of the main negative controlled switch module 102.

In the embodiments, the precharge circuit includes a precharge switch module and a precharge resistor, the precharge switch module and the precharge resistor are connected in series and then connected in parallel with the main positive controlled switch module, or the precharge switch module and the precharge resistor are connected in series and then connected in parallel with the main negative controlled switch module, such that the power transmission main circuit can be turned on to precharge the external load during high-voltage power-on at the vehicle end, improving the safety of high-voltage power-on at the vehicle end.

In some embodiments, continuing to refer to FIG. 7, the battery high-voltage box further includes a charging positive switch module 30 and a charging negative switch module 40, and the charging interface includes a charging positive interface C1 and a charging negative interface C2. A first end of the charging positive switch module 30 is connected to the battery positive interface A1, and a second end of the charging positive switch module 30 is connected to the charging positive interface C1. A first end of the charging negative switch module 40 is connected to the battery negative interface A2, and a second end of the charging negative switch module 40 is connected to the charging negative interface C2. The charging positive switch module 30 is configured to connect the charging positive interface C1 to the battery positive interface A1 during charging of a battery cluster. The charging negative switch module 40 is configured to connect the charging negative interface C2 to the battery negative interface A2 during charging of the battery cluster.

In the embodiments, the battery high-voltage box includes a charging positive interface, a charging negative interface, a charging positive switch module, and a charging negative switch module, the charging positive interface is connected to the charging positive switch module, the charging positive switch module is connected to the battery positive interface, the charging negative interface is connected to the charging negative switch module, the charging negative switch module is connected to the battery negative interface, and the charging positive switch module and the charging negative switch module are capable of turning on the charging circuit to charge the battery cluster when the battery cluster at the vehicle end needs to supplement electric energy, thereby satisfying temporary power demand.

Embodiments of the present application also propose a battery pack, where the battery pack includes the battery high-voltage box according to any one of the above.

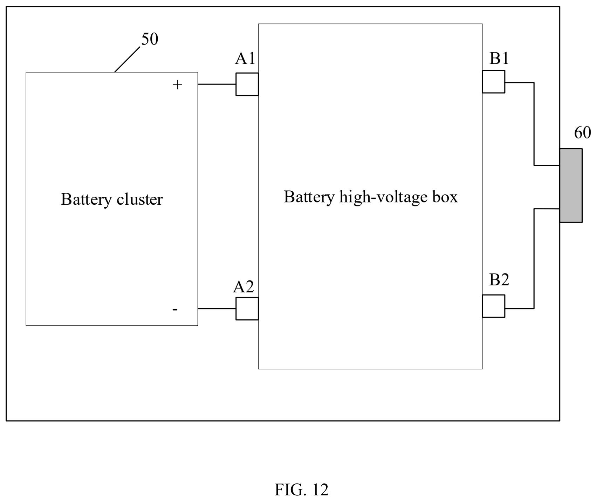

In some embodiments, referring to FIG. 12, the battery pack further includes a battery cluster 50 and an external load connector 60, a positive electrode of the battery cluster 50 is connected to the battery positive interface A1, and a negative electrode of the battery cluster 50 is connected to the battery negative interface A2. A positive electrode of the external load connector 60 is connected to the main circuit positive interface B1, and a negative electrode of the external load connector 60 is connected to the main circuit negative interface B2. The external load connector 60 supplies power to an external load when the battery pack is at a vehicle end. The external load connector 60 transmits electric energy input by a battery swapping station to charge the battery cluster 50 when the battery pack is at the battery swapping station.

The battery cluster may be a battery cluster obtained by connecting several battery cells in series or in parallel. The external load connector may be a dedicated connector configured to implement quick electrical connection and separation between the vehicle and the battery pack.

In an implementation, a positive electrode of the battery cluster 50 is connected to the battery positive interface A1 on the battery high-voltage box, a negative electrode of the battery cluster 50 is connected to the battery negative interface A2 on the battery high-voltage box, a positive electrode of the external load connector 60 is connected to the main circuit positive interface B1 on the battery high-voltage box, and a negative electrode of the external load connector 60 is connected to the main circuit negative interface B2 on the battery high-voltage box. When the battery pack is at the vehicle end, the external load connector 60 serves as a discharge interface to supply power to the vehicle end; and when the battery pack is at the battery swapping station, the external load connector 60 serves as a charging interface to charge the battery cluster, that is, the external load connector 60 can serve as both a charging interface and a discharge interface.

In an optional embodiment, the number of external load connectors 60 may be configured according to overcurrent demand, and if the overcurrent demand is high, multiple external load connectors may be configured.

In the embodiments, the battery pack includes a battery cluster and an external load connector, a positive electrode of the battery cluster is connected to the battery positive interface, a negative electrode of the battery cluster is connected to the battery negative interface, a positive electrode of the external load connector is connected to the main circuit positive interface, and a negative electrode of the external load connector is connected to the main circuit negative interface. The external load connector is configured to supply power to the external load when the battery pack is at the vehicle end and transmit electric energy input by the battery swapping station to charge the battery cluster when the battery pack is at the battery swapping station. The external load connector can serve as both a discharge interface and a charging interface, achieving charging and discharging through the same port, reducing the hardware cost of the battery pack.

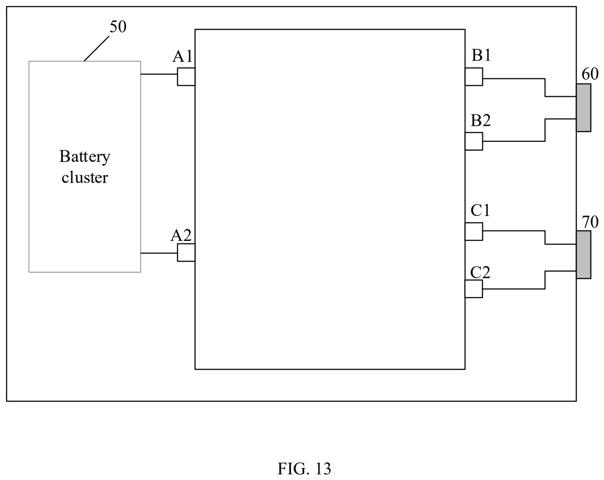

In some embodiments, referring to FIG. 13, the battery pack further includes a charging socket 70. A positive electrode of the charging socket 70 is connected to the charging positive interface C1, and a negative electrode of the charging socket 70 is connected to the charging negative interface C2. The charging socket 70 is configured to transmit electric energy input by a charging gun to charge the battery cluster 80.

The charging socket may be a socket connected to an external charging device.

In an implementation, the battery pack includes a charging socket 70, a positive electrode of the charging socket 70 is connected to the charging positive interface C1 on the battery high-voltage box, and a negative electrode of the charging socket 70 is connected to the charging negative interface C2 on the battery high-voltage box. In the case of charging the battery cluster, the charging gun is connected to the charging socket, and electric energy is transmitted to the battery positive interface A1 and the battery negative interface A2 through the charging circuit to charge the battery cluster.

In an optional embodiment, the charging socket is integrated on the battery pack, and when the vehicle needs temporary supplementary charging, plug-in charging may be performed through the charging socket. The number of charging sockets may be configured according to charging time demand, and if the charging time demand is short, multiple charging sockets may be configured to improve the charging speed.

In the embodiments, the battery pack further includes a charging socket, a positive electrode of the charging socket is connected to the charging positive interface, and a negative electrode of the charging socket is connected to the charging negative interface, and the charging socket is disposed on the housing of the battery pack, without the need to establish a connection with the base at the vehicle end through a separate external load connector, reducing the number of external load connectors used and lowering the hardware cost.

In some embodiments, the battery pack further includes a housing, and the battery high-voltage box is disposed in the housing. The external load connector 60 and the charging socket 70 are disposed on the housing.

In an implementation, the battery high-voltage box is disposed in the housing of the battery pack, and the external load connector 60 and the charging socket 70 are disposed on the housing.

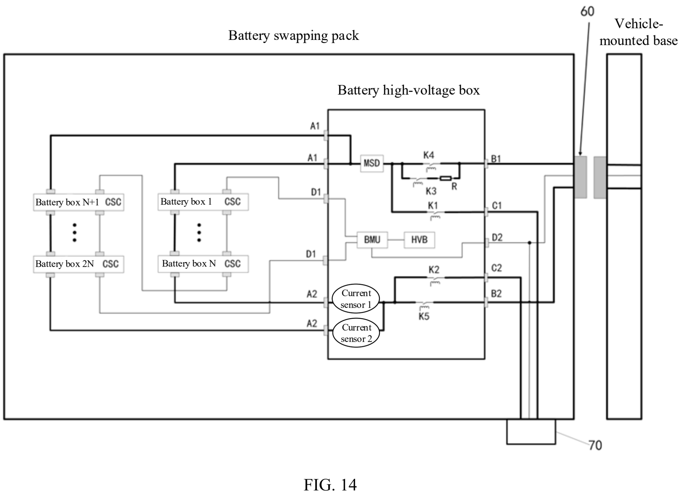

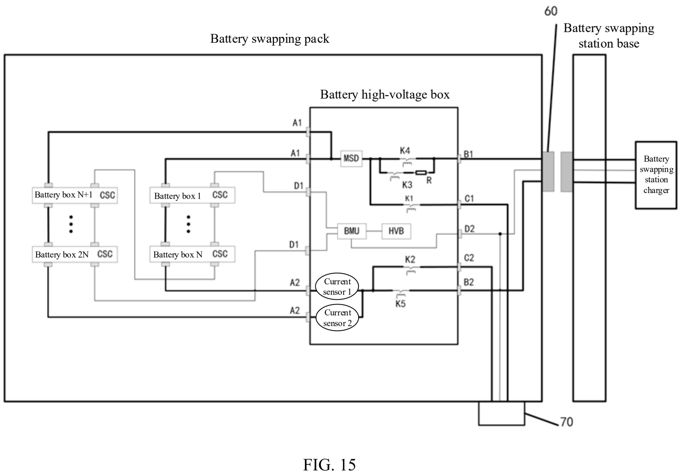

In an optional embodiment, referring to FIG. 14, FIG. 14 is a schematic diagram of the battery pack establishing a connection with the vehicle end through a vehicle-mounted base, where a battery cluster 50 includes multiple battery boxes, each battery box is provided with a monitor CSC, the CSC of each battery box is connected to the first low-voltage interface D1, the positive electrode of each battery box is connected to the battery positive interface A1, the negative electrode of each battery box is connected to the battery negative interface A2, the main circuit positive interface B1 is connected to the positive electrode of the external load connector 60, the main circuit negative interface B2 is connected to the negative electrode of the external load connector 60, the second low-voltage interface D2 is connected to the BMU and then connected to the low-voltage interface on the external load connector, the charging positive interface C1 is connected to the positive electrode of the charging socket 70, the charging negative interface C2 is connected to the negative electrode of the charging socket 70, the low-voltage interface of the charging socket 70 is connected to the second low-voltage interface D2, and the external load connector 60 establishes a connection with the vehicle end through the vehicle-mounted base to supply power to the vehicle end. In another optional embodiment, referring to FIG. 15, FIG. 15 is a schematic diagram of the battery pack connected to a battery swapping station charger through a battery swapping station base, where the external load connector establishes a connection with the battery swapping station charger through the battery swapping station base, and the battery swapping station charger charges the battery cluster through the external load connector.

In this embodiment, the external load connector and the charging socket are disposed on the housing, which can reduce the number of external load connectors used, lowering the hardware cost.

To achieve the above purposes, the present application also proposes a vehicle, where the vehicle includes the battery pack as described above. The specific structure of the battery pack refers to the above embodiments. Since the vehicle adopts all the technical solutions of all the above embodiments, the vehicle at least has all the beneficial effects brought by the technical solutions of the above embodiments, and details are not repeated herein.

The above are only preferred embodiments of the present application, and are not intended to limit the patent scope of the present application. Any equivalent structural transformations made using the contents of the description and drawings of the present application under the inventive concept of the present application, or direct/indirect application in other related technical fields, are included in the patent protection scope of the present application.

## Claims

1. A battery high-voltage box configured to connect a battery and an external load, wherein the battery high-voltage box comprises a battery positive interface, a battery negative interface, a power transmission main circuit, a controlled switch module, and a precharge circuit;
the power transmission main circuit is connected to the battery positive interface and the battery negative interface respectively, the controlled switch module is disposed on the power transmission main circuit, and the precharge circuit is connected in parallel with the controlled switch module; and
the precharge circuit, when in a conductive state, is configured to precharge the external load.

2. The battery high-voltage box according to claim 1, wherein the battery high-voltage box further comprises a main circuit positive interface configured to be connected to a positive electrode of an external load connector and a main circuit negative interface configured to be connected to a negative electrode of the external load connector.

3. The battery high-voltage box according to claim 2, wherein the controlled switch module comprises a main positive controlled switch module and/or a main negative controlled switch module, the main positive controlled switch module is connected to the battery positive interface and the main circuit positive interface respectively, and the main negative controlled switch module is connected to the battery negative interface and the main circuit negative interface respectively.

4. The battery high-voltage box according to claim 3, wherein the precharge circuit being connected in parallel with the controlled switch module comprises the precharge circuit being connected in parallel with the main positive controlled switch module or the precharge circuit being connected in parallel with the main positive controlled switch module.

5. The battery high-voltage box according to any one of claims 1 to 4, wherein the battery high-voltage box further comprises a charging interface configured to be connected to a charging socket.

6. The battery high-voltage box according to claim 5, wherein the battery high-voltage box further comprises a charging positive switch module and a charging negative switch module, and the charging interface comprises a charging positive interface and a charging negative interface;
the charging positive interface is connected to the charging positive switch module, the charging positive switch module is connected to the battery positive interface, the charging negative interface is connected to the charging negative switch module, and the charging negative switch module is connected to the battery negative interface;
the charging positive switch module is configured to connect the charging positive interface to the battery positive interface during charging of a battery cluster; and
the charging negative switch module is configured to connect the charging negative interface to the battery negative interface during charging of the battery cluster.

7. The battery high-voltage box according to claim 6, wherein the battery high-voltage box further comprises a manual service disconnect, a first end of the manual service disconnect is connected to the battery positive interface, and a second end of the manual service disconnect is connected to a first end of the charging positive switch module.

8. The battery high-voltage box according to claim 1, wherein the battery high-voltage box further comprises a main circuit positive interface and a main circuit negative interface, the main circuit positive interface is configured to be connected to a positive electrode of an external load connector, the main circuit negative interface is configured to be connected to a negative electrode of the external load connector, and the controlled switch module comprises a main positive controlled switch module; and
a first end of the main positive controlled switch module is connected to the battery positive interface, and a second end of the main positive controlled switch module is connected to the main circuit positive interface.

9. The battery high-voltage box according to claim 8, wherein the precharge circuit is disposed in a main positive circuit in the power transmission main circuit, a first end of the precharge circuit is connected to the first end of the main positive controlled switch module, and a second end of the precharge circuit is connected to the second end of the main positive controlled switch module.

10. The battery high-voltage box according to claim 1, wherein the battery high-voltage box further comprises a main circuit positive interface and a main circuit negative interface, the main circuit positive interface is configured to be connected to a positive electrode of an external load connector, the main circuit negative interface is configured to be connected to a negative electrode of the external load connector, and the controlled switch module comprises a main negative controlled switch module; and
a first end of the main negative controlled switch module is connected to the battery negative interface, and a second end of the main negative controlled switch module is connected to the main circuit negative interface.

11. The battery high-voltage box according to claim 10, wherein the precharge circuit is disposed in a main negative circuit in the power transmission main circuit, a first end of the precharge circuit is connected to the first end of the main negative controlled switch module, and a second end of the precharge circuit is connected to the second end of the main negative controlled switch module.

12. The battery high-voltage box according to claim 1, wherein the battery high-voltage box further comprises a main circuit positive interface and a main circuit negative interface, the controlled switch module comprises a main positive controlled switch module and a main negative controlled switch module, the main circuit positive interface is configured to be connected to a positive electrode of an external load connector, and the main circuit negative interface is configured to be connected to a negative electrode of the external load connector; and
a first end of the main positive controlled switch module is connected to the battery positive interface, a second end of the main positive controlled switch module is connected to the main circuit positive interface, a first end of the main negative controlled switch module is connected to the battery negative interface, and a second end of the main negative controlled switch module is connected to the main circuit negative interface.

13. The battery high-voltage box according to claim 12, wherein the precharge circuit is disposed in a main positive circuit in the power transmission main circuit, a first end of the precharge circuit is connected to the first end of the main positive controlled switch module, and a second end of the precharge circuit is connected to the second end of the main positive controlled switch module, or the precharge circuit is disposed in a main negative circuit in the power transmission main circuit, a first end of the precharge circuit is connected to the first end of the main negative controlled switch module, and a second end of the precharge circuit is connected to the second end of the main negative controlled switch module.

14. The battery high-voltage box according to claim 3, wherein the precharge circuit comprises a precharge switch module and a precharge resistor;
a first end of the precharge switch module is connected to the first end of the main positive controlled switch module, a second end of the precharge switch module is connected to a first end of the precharge resistor, and a second end of the precharge resistor is connected to the second end of the main positive controlled switch module, or a first end of the precharge switch module is connected to the first end of the main negative controlled switch module, a second end of the precharge switch module is connected to a first end of the precharge resistor, and a second end of the precharge resistor is connected to the second end of the main negative controlled switch module.

15. The battery high-voltage box according to claim 5, wherein the battery high-voltage box further comprises a charging positive switch module and a charging negative switch module, and the charging interface comprises a charging positive interface and a charging negative interface;
a first end of the charging positive switch module is connected to the battery positive interface, a second end of the charging positive switch module is connected to the charging positive interface, a first end of the charging negative switch module is connected to the battery negative interface, and a second end of the charging negative switch module is connected to the charging negative interface;
the charging positive switch module is configured to connect the charging positive interface to the battery positive interface during charging of a battery cluster; and
the charging negative switch module is configured to connect the charging negative interface to the battery negative interface during charging of the battery cluster.

16. A battery pack, wherein the battery pack comprises the battery high-voltage box according to any one of claims 1 to 15.

17. The battery pack according to claim 16, wherein the battery pack further comprises a battery cluster and an external load connector;
a positive electrode of the battery cluster is connected to the battery positive interface, a negative electrode of the battery cluster is connected to the battery negative interface, a positive electrode of the external load connector is connected to the main circuit positive interface, and a negative electrode of the external load connector is connected to the main circuit negative interface; and
the external load connector is configured to supply power to an external load when the battery pack is at a vehicle end; and is further configured to transmit electric energy input by a battery swapping station to charge the battery cluster when the battery pack is at the battery swapping station.

18. The battery pack according to claim 17, wherein the battery pack further comprises a charging socket, a positive electrode of the charging socket is connected to the charging positive interface, and a negative electrode of the charging socket is connected to the charging negative interface; and
the charging socket is configured to transmit electric energy input by a charging gun to charge the battery cluster.

19. The battery pack according to claim 18, wherein the battery pack further comprises a housing, and the battery high-voltage box is disposed in the housing; and
the external load connector and the charging socket are both disposed on the housing.

20. A vehicle, wherein the vehicle comprises the battery pack according to any one of claims 16 to 19.
